# EUROPEAN PATENT APPLICATION

(11) **EP 4 572 304 A1**
(43) Date of publication of application: **18.06.2025**
(21) Application number: 23865294.5
(22) Date of filing: 31.08.2023
(51) Int. Cl.: H04N 1/60, B41J 2/525, H04N 1/407

(54) **PROFILE CREATION METHOD, PROFILE SEARCH METHOD, PROGRAM, PROFILE CREATION DEVICE, AND METHOD FOR CREATING SETTING INFORMATION**

(30) Priority: 15.09.2022 JP 2022147252
(71) Applicant: Mimaki Engineering Co., Ltd., Tomi-city Nagano 389-0512 (JP)
(72) Inventor: Furuya, Chika, Tomi-city, Nagano 3890512 (JP)
(74) Representative: Bandpay & Greuter
(86) International application number: PCT/JP2023/031679
(87) International publication number: WO 2024/057938

(57) **Abstract**

Anew profile is appropriately created, for example, when a new medium is used. A profile creation method of creating device profiles used in a process of creating print data indicating an image printed by a printing apparatus 12, the profile creation method includes: a search step of performing search based on a search condition from known profiles that are known device profiles; and a profile creation step of creating a new device profile based on the known profiles selected based on a search result in the search step. The printing apparatus 12 is an apparatus that performs color printing using inks of a plurality of colors. In the search step, a smeared ink amount indicating an amount of ink in which smearing of ink has occurred on the medium is used as the search condition.

## Description

### TECHNICAL FIELD

The present invention relates to a profile creation method, a profile search method, a program, a profile creation device, and a method for creating setting information.

### BACKGROUND ART

In printing apparatuses, for example, inkjet printers, methods of performing color management using profiles (device profiles) have been widely used. In the related art, there is known a method of adjusting parameters of a printer based on measurement values associated with known paper profiles when performing printing on a paper sheet using parameters associated with the known paper profile (for example, see Patent Literature 1).

### CITATION LIST

### PATENT LITERATURE

Patent Literature 1: Japanese Patent No. 6727148

### SUMMARY OF INVENTION

### TECHNICAL PROBLEMS

When printing is performed in a printing apparatus, for example, an inkjet printer, it is preferable to use a profile created in accordance with features of a medium to be used in order to perform printing with high quality. Therefore, for example, when a new type of medium (hereinafter simply referred to as a new medium) is used, it is preferable to create a new profile appropriate for the medium. However, to create a new profile, a significant amount of man-hours and time is usually required. Therefore, in the related art, a method of creating a new profile more easily and appropriately has been desired. Accordingly, an object of the present invention is to provide a profile creation method, a profile search method, a program, a profile creation device, and a method for creating setting information capable of solving the above problems.

### SOLUTIONS TO PROBLEMS

The inventors of the present application contrived to create a new profile using a known profile in association with a method of creating the new profile (device profile) when a new medium is used. Therefore, the present inventors contrived to search for a known profile that has features as close as possible to desired features.

However, in this case, for example, if the search conditions are excessively detailed, there is concern of a corresponding known profile not being found. In this case, it may be difficult to designate the search conditions. On the other hand, when the search conditions are relaxed, it is considered that the number of corresponding known profiles becomes enormous, which may lead to problems that, for example, a time required to read a profile becomes long and a search time becomes excessively long. In this case, it may be difficult to find a known profile close to desired features due to relaxed search conditions. On the other hand, the inventors of the present application have found that searching of a known profile can be appropriately performed by focusing on an amount of ink in which smearing has occurred on a medium. The inventors of the present application have also found that a new profile can be appropriately created by using a known profile selected through the search.

The inventors of the present application have carried out further intensive research and have found features necessary for obtaining such effects and have finalized the present invention. In order to solve the above problems, the present invention is a profile creation method of creating device profiles used in a process of creating print data indicating an image printed by a printing apparatus is a method including: a search step of performing search based on a search condition from the known profiles that are known device profiles; and a profile creation step of creating a new device profile based on the known profile selected based on a search result in the search step. The printing apparatus is an apparatus that performs color printing using inks of a plurality of colors. In the search step, a smeared ink amount indicating an amount of ink in which smearing of ink has occurred on the medium is used as the search condition.

In such a configuration, it is possible to efficiently and appropriately search for a known profile used for creating a new profile (device profile). Accordingly, a new profile can be appropriately created. In this configuration, in the profile creation step, the new device profile is created by adjusting the hue of the known profile selected based on the search result in the search step. In this case, it is conceivable to adjust the hue as necessary. In such a configuration, it is possible to appropriately create the new profile with which a desired color can be expressed while preventing smearing.

Here, it is preferable that the profile can express a desired color in the printing apparatus by using the profile. In this case, it is desired to express various colors with the amount of ink in a range in which smearing does not occur on the medium. With regard to this factor, it is conceivable that the color expression can be relatively easily adjusted by adjusting the hue with regard to the known profile in the profile creation step. However, when smearing has occurred in the known profile, it is usually more difficult to perform adjustment so that a desired color is expressed while preventing smearing. Therefore, in the search step, by performing the search so that a known profile in which there is a high possibility of smearing occurring is not included in the search result, it is possible to perform the search for the known profile efficiently and appropriately. In this case, as described above, it is conceivable to use the smeared ink amount as the search condition in the search step.

In this configuration, the profile creation method further includes, for example, a chart printing step. In the chart printing step, the printing apparatus is caused to print a chart including a smearing checking pattern that is a pattern for checking the smeared ink amount on the medium. In this case, an input of the smeared ink amount is received from the user in the search step. In such a configuration, it is possible to check the smeared ink amount appropriately based on the chart including the smearing checking pattern. By receiving the input of the smeared ink amount from the user in the search step, it is possible to perform the search for the known profile appropriately based on the smeared ink amount. In this configuration, the smeared ink amount indicates the smeared ink amount in the secondary color. The secondary color can be considered as a color obtained by mixing two color inks. The smearing checking pattern includes a pattern in which the concentration of the color of the secondary color differs in a plurality of steps. In such a configuration, it is possible to appropriately check the smeared ink amount.

The search step includes, for example, a first selection step in which a known profile is selected based on the smeared ink amount and a second selection step in which the known profile selected in the first selection step is selected under a condition different from that in the first selection step. In the first selection step, the known profile with which printing can be performed with an amount of ink less than the smeared ink amount is selected. In such a configuration, the search in the search step can be efficiently and appropriately performed.

In the chart printing step, it is also conceivable to cause the printing apparatus to print a chart including a color checking pattern that is a pattern for checking the color expressed by the ink on the medium. In this case, in the search step, a colorimetric value obtained by performing colorimetry on the color checking pattern is further used as a search condition. In such a configuration, it is possible to search for a more appropriate profile as the known profile used in the profile creation step. In this case, the color checking pattern includes a color-by-color pattern that is a pattern in which the amount of ink per unit area differs in a plurality of steps for an ink of one same color. The colorimetric values used in the search step are values obtained by performing colorimetry on each of color-by-color patterns. In such a configuration, it is possible to appropriately perform the search in which the colorimetric value is used as the search condition in the search step.

In this case, for example, in the second selection step of the search step including the first selection step and the second selection step, it is conceivable to perform selection based on the colorimetric value for the known profile selected in the first selection step. In this case, the second selection step includes a reference ink amount setting step, a color difference calculation step, and a profile selection step. In the reference ink amount setting step, the reference ink amount used as a reference of the amount of ink per unit area is set. In this case, for each known profile, the reference ink amount is set based on the known profile. In the color difference calculation step, the color difference associated with the known profile is calculated. In this case, for each known profile, a color difference between a profile corresponding color that is a color corresponding to the reference ink amount in the known profile and a colorimetrically calculated color that is a color calculated based on a colorimetric value as a color corresponding to the reference ink amount is calculated. In the profile selection step, the known profile is selected based on the color difference calculated in the color difference calculation step. In such a configuration, the search for the known profile can be appropriately performed in the search step. In this case, in the color difference calculation step, it is conceivable to calculate the color difference for each color of the inks of a plurality of colors used in the printing apparatus and the color difference corresponding to the color of the medium for each known profile. In such a configuration, it is possible to select the known profile more appropriately in the profile selection step.

As a configuration of the present invention, it is also conceivable to use a profile search method, a program, and a profile creation device having the same features as those described above. In this case, it is also possible to obtain the same effects as described above.

With regard to the features of the present invention, the device profile can also be considered as an example of setting information that is information indicating a setting used in a process of creating print data. In this case, the features of the present invention can also be considered as features of the method for creating setting information. In this case, the present invention is a method for creating setting information that is information indicating a setting used in a process of creating print data indicating an image printed by a printing apparatus that performs printing using ink is a method including: a search step of performing search based on a search condition from known setting information that is the known setting information; and a setting information creation step of creating new setting information based on the known setting information selected based on a search result in the search step. In the search step, a smeared ink amount indicating an amount of ink in which smearing of ink has occurred on the medium is used as the search condition. In such a configuration, it is possible to search for the known setting information used to create the new setting information efficiently and appropriately. Accordingly, new setting information can be appropriately created. As a configuration of the present invention, it is also conceivable to use a setting information search method, a program, and a setting information creation device having features similar to those of the above-described method for creating setting information.

### EFFECT OF THE INVENTION

According to the present invention, it is possible to appropriately create a new profile when a new medium is used.

### BRIEF DESCRIPTION OF THE DRAWINGS

Fig. 1 is a diagram describing a printing system 10 according to an embodiment of the present invention. Fig. 1(a) illustrates an example of a configuration of the printing system 10. Fig. 1(b) illustrates an example of a configuration of a printing apparatus 12 in the printing system 10. Fig. 1(c) illustrates an example of a configuration of the head unit 102 in a printing apparatus 12.
Fig. 2 is a flowchart illustrating an example of an operation of selecting and creating a profile.
Fig. 3 is a diagram illustrating search conditions designated during search in steps S102 and S114. Fig. 3(a) illustrates an example of screen display for designating search conditions in step S102. Fig. 3(b) illustrates an example of screen display for designating search conditions in step S114.
Fig. 4 is a diagram illustrating an example of a chart to be printed by the printing apparatus 12 in step S112.
Fig. 5 is a flowchart illustrating an example of an operation of creating a new profile.
Fig. 6 is a flowchart illustrating an example of a more specific operation of a control PC 14 in step S206.

### DESCRIPTION OF EMBODIMENTS

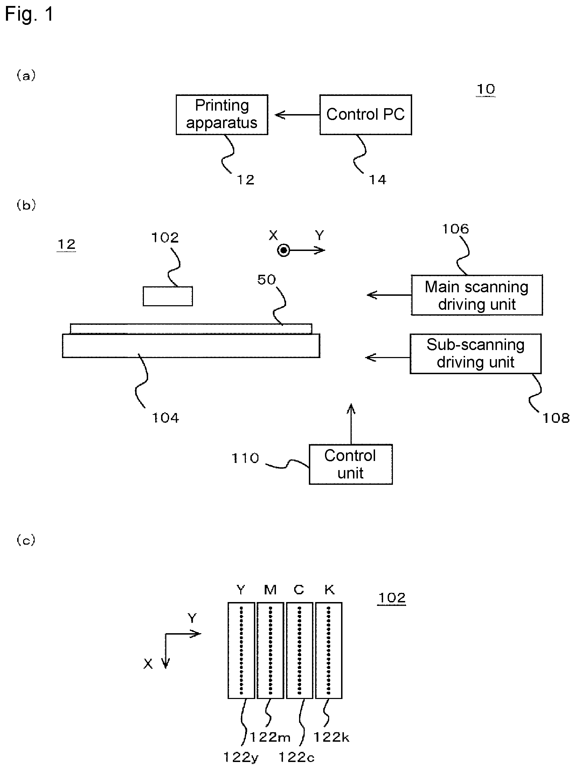

Hereinafter, embodiments according to the present invention will be described with reference to the drawings. Fig. 1 is a diagram illustrating a printing system 10 according to an embodiment of the present invention. Fig. 1(a) illustrates an example of a configuration of the printing system 10. Fig. 1(b) illustrates an example of a configuration of a printing apparatus 12 in the printing system 10. Fig. 1(c) illustrates an example of a configuration of the head unit 102 in a printing apparatus 12. Except for points to be described below, the printing system 10 and each configuration of the printing system 10 according to the present example may have features same as or similar to a known printing system and each configuration of the known printing system.

The printing system 10 according to the present example is a system that performs printing on a medium 50 to be printed on in accordance with an inkjet method, and includes a printing apparatus 12 and a control PC 14. The printing apparatus 12 is an inkjet printer that performs a printing operation of ejecting ink onto the medium 50, and performs a printing operation on the medium 50 under the control of the control PC 14. The control PC 14 is a computer that controls an operation of the printing apparatus 12, and controls the operation of the printing apparatus 12 by supplying print data indicating an image printed by the printing apparatus 12 to the printing apparatus 12. The control PC 14 creates print data by performing, for example, raster image processor (RIP) processing, and supplies the created print data to the printing apparatus 12. The control PC 14 according to the present example creates print data using a profile selected in accordance with the medium 50 and the ink used for the medium 50. This profile can be considered as an example of a device profile used for a process of creating print data. The print data may be created by a computer other than the control PC 14. In this case, the control PC 14 receives the print data from the computer and supplies the print data to the printing apparatus 12.

As described above, the printing system 10 according to the present example includes the printing apparatus 12 and the control PC 14, which are a plurality of apparatuses. In a modified example of the configuration of the printing system 10, for example, it is conceivable that the printing system 10 is configured with one apparatus. In this case, for example, it is conceivable to use the printing apparatus 12 that also has a function of the control PC 14. In a further modified example of the configuration of the printing system 10, it is conceivable to configure the printing system 10 with three or more apparatuses. In this case, for example, it is conceivable to configure the printing system 10 with the plurality of printing apparatuses 12 and the control PC 14. For example, it is also conceivable to configure the printing system 10 with three or more apparatuses by further using another apparatus that has some of the functions of the printing apparatus 12 or the control PC 14.

The printing apparatus 12 according to the present example is an inkjet printer that performs color printing using inks of a plurality of colors, and includes, for example, as illustrated in Fig. 1(b), a head unit 102, a platen 104, a main scanning driving unit 106, a sub-scanning driving unit 108, and a control unit 110. The head unit 102 is a unit that ejects ink onto the medium 50. The head unit 102 according to the present example includes a plurality of inkjet heads 122, for example, as illustrated in Fig. 1(c). The plurality of inkjet heads 122 includes inkjet heads 122 for inks of colors of yellow (Y color), magenta (M color), cyan (C color), and black (K color), as distinguished and illustrated as inkjet heads 122y to k in the drawing. In this case, the yellow, the magenta, the cyan, and the black inks are examples of process color inks. The process colors can be considered as basic colors in color printing. Of these colors, yellow, magenta, and cyan can be considered as primary colors. The head unit 102 may further include a configuration other than the inkjet head 122. For example, the head unit 102 may further include a colorimeter. In this case, it is conceivable that the colorimeter is used to perform colorimetry on a chart that is printed by the printing apparatus 12. The chart that is printed by the printing apparatus 12 can be considered as an image including a pattern for performing checking related to a printing operation.

The platen 104 is a table-shaped member on which the medium 50 is placed, and holds the medium 50 in a state in which the medium 50 faces the plurality of inkjet heads 122 in the head unit 102. The main scanning driving unit 106 is a driving unit that causes the head unit 102 to perform the main scanning operation. The main scanning operation can be considered as an operation of discharging an ink while moving the head unit 102 relative to the medium 50 in a main scanning direction (Y direction in the drawing) set in advance in the printing apparatus 12. An operation of causing the head unit 102 to perform the main scanning operation can be considered as an operation of causing the inkjet heads 122 in the head unit 102 to perform the main scanning operation. During the main scanning operation, the main scanning driving unit 106 causes the inkjet heads 122 of the head unit 102 to eject ink toward ejection positions set in accordance with a printing resolution under the control of the control unit 110. The sub-scanning driving unit 108 is a driving unit that causes the head unit 102 to perform the sub-scanning operation. The sub-scanning operation can be considered as an operation of moving the head unit 102 relative to the medium 50 in a sub-scanning direction (the X direction in the drawing) orthogonal to the main scanning direction. The sub-scanning operation can also be considered as an operation of sending the medium 50 in the sub-scanning direction during the main scanning operation. An operation of causing the head unit 102 to perform the sub-scanning operation can be considered as an operation of causing the inkjet heads 122 of the head unit 102 to perform the sub-scanning operation.

The control unit 110 is, for example, a unit that includes a CPU in the printing apparatus 12 and controls an operation of each unit of the printing apparatus 12. The control unit 110 according to the present example controls an operation of each unit of the printing apparatus 12 based on the print data received from the control PC 14. According to the present example, the printing operation on the medium 50 can be appropriately performed by the printing apparatus 12. The printing apparatus 12 may further have a configuration other than the above configuration. For example, the printing apparatus 12 may further include a fixing means that fixes the ink to the medium 50. In this case, it is conceivable to use a fixing means appropriate for the ink used in the inkjet head 122. For example, when an evaporation drying type ink that is fixed to the medium 50 by evaporation of a solvent is used, it is conceivable to use a heater that heats the medium 50 as the fixing means. When an ultraviolet curing type ink that is cured by irradiation of an ultraviolet ray is used, it is conceivable to use an ultraviolet light source as a fixing means. In this case, the ultraviolet light source may be disposed at a position adjacent to the inkjet head 122 in the main scanning direction.

Next, a profile used when the print data in the control PC 14 is created will be described in more detail. In the present example, in this profile, for example, colors expressed with the Lab color system are associates with colors expressed with a color system corresponding to the inks. In this case, the colors expressed with the color system corresponding to the inks can be considered as colors expressed with process colors used in the printing apparatus 12. As the colors expressed with the color system corresponding to the inks, for example, for yellow, magenta, cyan, and black, it is conceivable to use a value designated for each color within a predetermined range (for example, a range of 0 to 100). As such a profile, for example, a profile of a known format of an ICC profile can be appropriately used. In the control PC 14, the profile is selected in accordance with a model of the printing apparatus 12, an ink set indicating inks used in the printing apparatus 12, the type of medium 50, and printing conditions. In this case, for example, it is conceivable to use a printing resolution and the number of passes as the printing conditions. The number of passes can be considered as the number of main scanning operations in which the head unit 102 passes through a position facing one position on the medium 50.

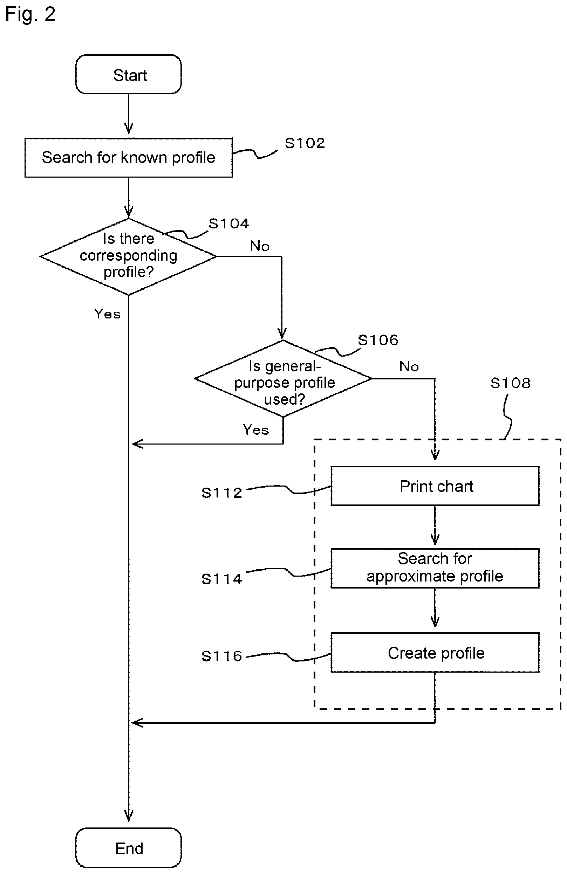

In this case, even when printing is performed by the printing apparatus 12 of the same model, the profile to be used is changed when the ink set to be used, the medium 50 (type of medium 50), or the printing conditions is changed. Therefore, the control PC 14 selects the profile to be used from many profiles prepared in advance in accordance with various conditions, for example, in response to a user's instruction, and creates print data. However, for example, when a new medium 50 (a new type of medium 50) is used, it is conceivable that there is no appropriate known profile. In such a case, it is conceivable to create a new profile. In the present example, for example, selection and creation of the profile are performed through an operation illustrated in Fig. 2.

Fig. 2 is a flowchart illustrating an example of an operation of selecting and creating a profile. The printing system 10 according to the present example performs the operation illustrated in Fig. 2 when the printing apparatus 12 is caused to perform printing on a new type of medium (new medium). The operation illustrated in the flowchart can be considered as an example of an operation performed by the computer, for example, the control PC 14, in accordance with the program. The computer can be considered as a computer that creates print data. The program may be a part of a program for creating print data. The computer according to the present example functions as a profile creation device by performing at least a part of the operation of the flowchart of Fig. 2 in accordance with the program. Hereinafter, to facilitate description, an operation performed by a computer, for example, the control PC 14, among the operations illustrated in Fig. 2 will be described as an operation of the control PC 14.

In the operation illustrated in Fig. 2, the control PC 14 first searches for a known device profile (hereinafter referred to as a known profile) in order to find a device profile that can be used during creation of print data to be performed subsequently (S102). In this case, the control PC 14 searches for the known profile based on the model of the printing apparatus 12 that performs printing, the ink set, the type of medium 50, and the printing conditions. The search conditions designated during the search of step S102 will be described below in more detail.

In step S102, when the corresponding profile which is a known profile matching the designated search condition is found (Yes in S104), the control PC 14 ends the selection of the profile. In this case, the control PC 14 subsequently creates the print data using the corresponding profile found in the search. When the corresponding profile is not found in step S102 (No in S104), the control PC 14 asks the user whether to use a general-purpose profile (generic) prepared in advance (S106). In this case, the general-purpose profile can be considered as a profile that can generally be used for a plurality of types of media 50. The general-purpose profile does not completely match the search conditions used in step S102, but can be considered as a profile that can be formally used during creation of the print data. Then, in step S106, when the user determines to use the general-purpose profile (Yes in S106), the control PC 14 ends selecting the profile. In this case, thereafter, the control PC 14 creates the print data using the general-purpose profile. When the user determines not to use the general-purpose profile in step S106 (No in S106), the control PC 14 creates the new profile based on any known profile (S108).

In the operation of creating the new profile, the control PC 14 first causes the printing apparatus 12 to print a chart including a predetermined pattern (S112). The operation of step S112 of the present example is an example of an operation of a chart printing step and a chart printing process. The chart to be printed by the printing apparatus 12 in step S112 will be described below in more detail. In this case, based on a state of the chart printed in step S112, the search conditions used for the profile search to be performed subsequently is determined. In the present example, the user checks the state of the chart to determine some search conditions. At least some other search conditions are determined by performing colorimetry on the chart. Then, the control PC 14 selects an approximate profile that is a profile used for creating a new profile by searching for a known profile based on the determined search conditions (S114). The operation of step S114 in the present example is an example of the operation of the search step and the search process. The approximate profile selected in step S114 can be considered as a profile that has features similar to those of the new profile to be created. The search conditions designated during the search of step S114 will also be described below in more detail.

The control PC 14 creates a new profile by adjusting a hue as necessary for the approximate profile selected in step S114 (S116). The operation of step S116 in the present example is an example of the operation of the profile creation step and the profile creation process. The operation of step S116 can also be considered as an operation of creating a new device profile based on a profile selected based on a search result in the search step. The operation of creating the new profile in step S116 will also be described below in more detail. In the present example, when the new profile is created in step S116, the control PC 14 then creates print data using the new profile. According to the present example, the new profile can be appropriately created as necessary. Accordingly, the print data can be appropriately created.

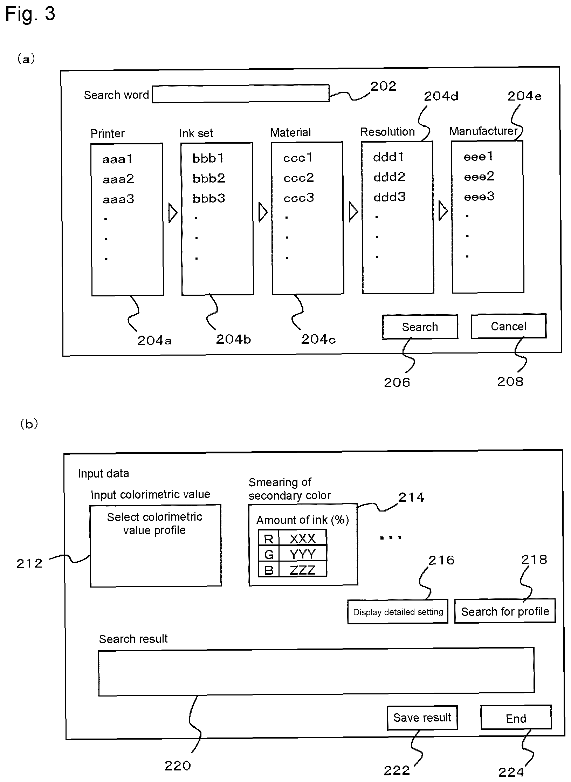

Next, the search conditions designated at the time of the search in steps S102 and S114, and the chart printed by the printing apparatus 12 in step S112 will be described in more detail. Fig. 3 is a diagram describing search conditions designated during the search of steps S102 and S114. Fig. 3(a) illustrates an example of screen display for designating search conditions in step S102. Fig. 3(b) illustrates an example of screen display for designating search conditions in step S114. Screen displays illustrated in Figs. 3(a) and 3(b) can be considered as examples of screen displays shown for the user by the control PC 14 in order to receive designation of the search conditions by the user.

In step S102 of the present example, the control PC 14 displays a screen including a search word input part 202, a plurality of search condition setting parts 204, and a plurality of buttons 206 and 208 for the user by a display device, for example, a monitor, for example, as illustrated in Fig. 3(a). In this case, a screen including five search condition setting parts 204 is displayed as the plurality of search condition setting parts 204 so that search condition setting parts are distinguished from each other by adding reference numerals 204a to 204e in the drawing. Of these configurations, the search word input part 202 is an input unit that inputs any word as a search key. The search word input part 202 can be considered as an input unit that designates a search key other than the items designated by the search condition setting parts 204a to 204e with a free word.

The search condition setting parts 204a to 204e are setting units that designate various items associated with the known profile as search keys. The search condition setting parts 204a to 204e according to the present example set the items to be used as the search keys by receiving selection of the user from options prepared in advance. More specifically, the control PC 14 allows the user to select a model of the printing apparatus 12 by the search condition setting part 204a. The search condition setting part 204b allows the user to select the ink set used in the printing apparatus 12. The search condition setting part 204c allows the user to select the type of the medium 50 to be used in the printing apparatus 12. In the illustrated example, the control PC 14 allows the user to select a material of the medium 50 for the type of medium 50. The control PC 14 allows the user to select printing conditions by the search condition setting part 204d. In the case of the illustrated example, the control PC 14 allows the user to select a printing resolution with regard to the printing condition. As the printing conditions, designation of conditions other than the resolution may be received. In this case, for example, it is conceivable to further receive designation of the number of passes in addition to the resolution. For example, designation of whether to set volumes of inks (a volume of droplets) ejected from the inkjet head 122 by the printing apparatus 12 to only one predetermined type of volume or to vary the volumes of inks in a plurality of steps may be received. In this case, the designation for varying the volumes of the inks can be considered as designation for using a so-called variable dot (VD) setting. The control PC 14 causes the search condition setting part 204e to allow the user to select a provider (a manufacturer of the medium 50) that provides the medium 50.

The button 206 is a button for receiving an instruction to start the search from the user. When the button 206 is pressed by the user, the control PC 14 searches for a known profile using items input or designated by the search word input part 202 and the search condition setting parts 204a to 204e as search keys. According to the present example, the designation of the search conditions for searching for the known profile used during creation of the print data can be appropriately received from the user. Accordingly, the known profile can be appropriately searched for. A button 208 is a button for receiving an instruction to cancel the search from the user. When the button 208 is pressed by the user, the control PC 14 stops the operation without executing the search.

When the user inputs or designates values for only some items on the display screen illustrated in Fig. 3(a), the control PC 14 searches for the known profile based only on the input or designated items. When there is no input to the search word input part 202 and only the selection for the search condition setting parts 204a to 204e is performed by the user, the control PC 14 searches for the known profile based on only the items selected in the search condition setting parts 204a to 204e. It may be difficult for the user to determine an appropriate option for at least some items on which designation is received with the search condition setting parts 204a to 204e. For example, it may be difficult for the user to appropriately determine a material and a manufacturer of the medium 50. Therefore, in the search condition setting parts 204 (for example, the search condition setting parts 204c and 204e) corresponding to such items, it is preferable to include an option that does not indicate a specific selection item in the options. As such options, for example, it is conceivable to use options indicating all or unselected options. In such a configuration, the selection of the user can be more appropriately received.

In step S114 of the present example, the control PC 14 displays a screen including items related to a data input and a search result for the user by a display device, for example, a monitor, for example, as illustrated in Fig. 3(b). The control PC 14 then displays, for the user, a colorimetric value setting part 212, a smearing condition setting part 214, and a plurality of buttons 216 and 218 as items related to the data input. These items related to the data input can be considered as items for receiving designation of the search conditions in step S114. The control PC 14 according to the present example receives an input of colorimetric values for the chart by the colorimetric value setting part 212. In the control PC 14 according to the present example, the colorimetric value setting part 212 receives designation of a data file indicating colorimetric values for a part of the chart printed by the printing apparatus 12 in step S112 in the operation illustrated in Fig. 2 from the user. Accordingly, the control PC 14 receives an input of the colorimetric values based on an instruction of the user. The colorimetric values received by the colorimetric value setting part 212 will be described below in more detail in association with content of the chart.

The control PC 14 receives, from the user, an input of the smeared ink amount by the smearing condition setting part 214. In this case, the smeared ink amount can be considered as an amount of ink in which the smearing of the ink has occurred on the medium 50. The control PC 14 according to the present example receives information indicating a smeared ink amount in the secondary color as the smeared ink amount by the smearing condition setting part 214. The secondary color can be considered as a color obtained by mixing two color inks. The secondary color can also be considered as a color obtained by mixing two primary colors different from each other. For example, when yellow, magenta, and cyan are primary colors as in the present example, red (R color), green (G color) and blue (B color), which are colors obtained by mixing two colors from these colors can be considered as secondary colors. The control PC 14 according to the present example receives an input of the smeared ink amount when the user inputs a numerical value to the smearing condition setting part 214. In this case, the user inputs the smeared ink amount based on a result of visually determining a part of the chart printed by the printing apparatus 12 in step S112 in the operation illustrated in Fig. 2. The smeared ink amount received by the smearing condition setting part 214 will be described below in more detail in association with the content of the chart.

Of the items related to a data input, the button 216 is a button for setting more detailed search conditions. When the user presses the button 216, the control PC 14 displays a screen for setting the search conditions in more detail for the user. In such a configuration, the search conditions can be set in more detail as necessary. The button 218 is a button for receiving an instruction to start the search from the user. When the user presses the button 218, the control PC 14 searches for a known profile using the items input by the colorimetric value setting part 212 and the smearing condition setting part 214 as search keys. Accordingly, the control PC 14 performs search to find an approximate profile used for creating a new profile.

The control PC 14 displays a search result display part 220 and a plurality of buttons 222 and 224 as items related to the search result for the user. Of these items, the search result display part 220 is a display part that displays a search result. The control PC 14 according to the present example notifies the user of the profile found as the approximate profile by displaying the result of the search executed by pressing the button 218 on the search result display part 220. The button 222 is a button for saving the search result. When the user presses the button 222, the control PC 14 saves the search result displayed on the search result display part 220. The button 224 is a button for ending the operation of the search. When the user presses the button 224, the control PC 14 ends the display of the screen illustrated in Fig. 3(b). According to the present example, it is possible to appropriately perform the search to find an approximate profile used for creating a new profile.

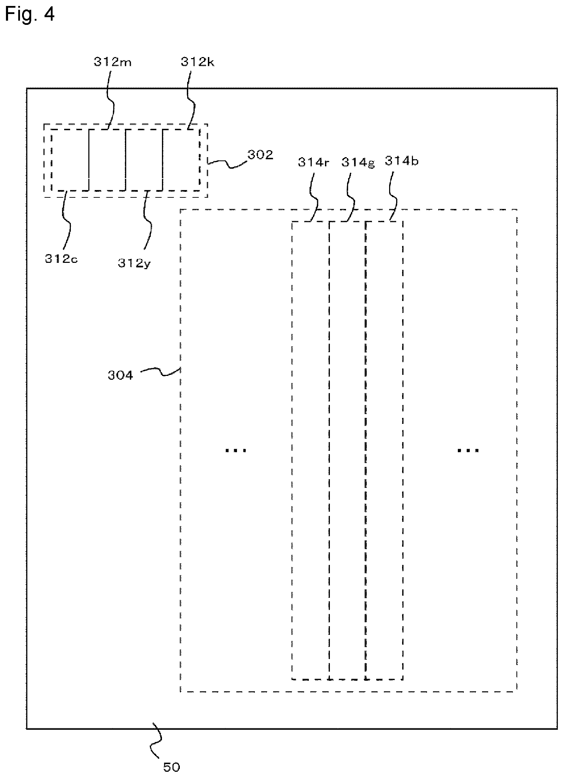

Next, the chart that the printing apparatus 12 is caused to print according to the present example will be described in more detail. Fig. 4 illustrates an example of a chart that the printing apparatus 12 is caused to print in step S112. As described above, when the new profile is created in the present example, the control PC 14 causes the printing apparatus 12 to print the chart including a predetermined pattern. In this case, for example, as illustrated in the drawing, the control PC 14 causes the printing apparatus 12 to print the chart including a color checking pattern 302 and a smearing checking pattern 304 on the medium 50. The color checking pattern 302 can be considered as a pattern for checking the color represented by the ink used in the printing apparatus 12. The smearing checking pattern 304 can be considered as a pattern for checking the smeared ink amount.

The color checking pattern 302 according to the present example includes a plurality of color-by-color patterns 312c to 312k. The color-by-color pattern 312c is a pattern in which an amount of ink per unit area differs in a plurality of steps for the cyan ink. The color-by-color pattern 312m is a pattern in which an amount of ink per unit area differs in a plurality of steps for the magenta ink. The color-by-color pattern 312y is a pattern in which an amount of ink per unit area differs in a plurality of steps for the yellow ink. The color-by-color pattern 312k is a pattern in which an amount of ink per unit area differs in a plurality of steps for the black ink. The color-by-color patterns 312c to 312k can also be considered as patterns in which the amount of ink per unit area differs in a plurality of steps for one color of the ink of the same color.

The smearing checking pattern 304 according to the present example includes a plurality of secondary color patterns 314r to 314b. The secondary color patterns 314r to 314b can be considered as patterns in which the concentration of the secondary color differs in a plurality of steps. As the secondary color patterns 314r to 314b according to the present example, patterns in which the concentration of red, green, and blue expressed by mixing two colors of yellow, magenta, and cyan, which are inks of primary colors, at the same ratio differ in a plurality of steps are used. In this case, an operation of mixing the primary color inks at the same ratio can be considered as an operation of mixing the inks with the same amount of ink per unit area. Furthermore, an operation of making the concentration of the secondary color differ in a plurality of steps can be considered as an operation of making the amount of ink per unit area of the primary color used to express the secondary color differ in a plurality of steps.

As described above, the control PC 14 according to the present example uses the colorimetric value and the smeared ink amount as the search condition for finding the approximate profile. In this case, as the colorimetric value, a colorimetric value obtained by performing colorimetry on the color checking pattern 302 is used. An operation of performing colorimetry on the color checking pattern 302 can be considered as an operation of performing colorimetry on each of the color-by-color patterns 312c to 312k of the color checking pattern 302. The colorimetry of the color checking pattern 302 can be performed using a known colorimeter. As such a colorimeter, a colorimeter installed in the printing apparatus 12 can be appropriately used. As the colorimeter, a colorimeter installed outside of the printing apparatus 12 may be used.

Of the search conditions according to the present example, a value determined by the user from the smearing checking pattern 304 is used for the smeared ink amount. The value determined by the user from the smearing checking pattern 304 can be considered as a value determined by the user based on states of the secondary color patterns 314r to 314b in the smearing checking pattern 304. In this case, the user determines the smeared ink amount by visually checking the states of the secondary color patterns 314r to 314b and determining the color concentration at a location where the smearing which is a problem in a required printing quality has occurred. As in the present example, when the smearing checking pattern 304 includes the secondary color patterns 314r to 314b corresponding to the plurality of secondary colors (red, green, and blue), it is conceivable that a difference occurs in the concentration of the color in which the smearing has occurred depending on color. In such a case, the smeared ink amount is determined based on the concentration of color in which the smearing has occurred with a smallest amount of ink among the secondary color patterns 314r to 314b.

According to the present example, the colorimetric value and the smeared ink amount used as the search conditions can be appropriately checked based on the chart that the printing apparatus 12 is caused to print. Accordingly, it is possible to appropriately search for a known profile to be used as an approximate profile during creation of a new profile. In this case, the information necessary for the search can be appropriately acquired by printing the chart including the color checking pattern 302 and the smearing checking pattern 304 on one medium 50. Therefore, according to the present example, it is possible to appropriately create a new profile without printing many charts.

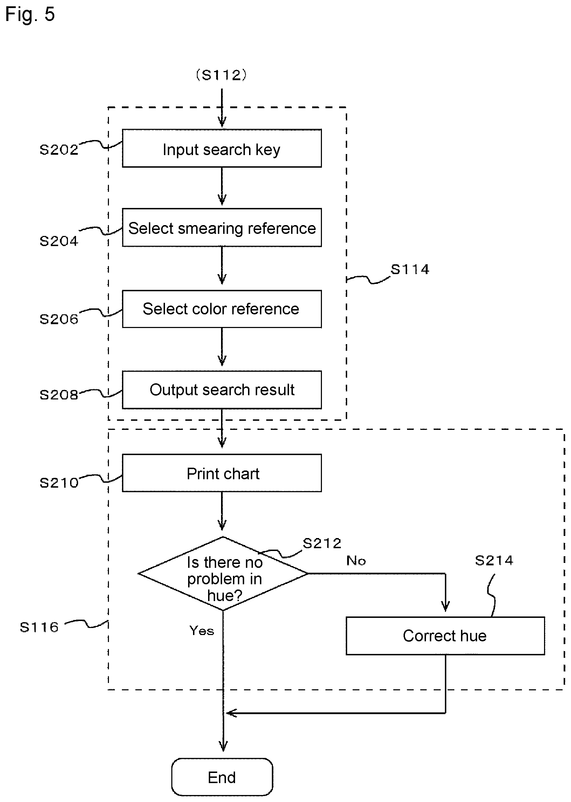

The specific configuration of the chart that the printing apparatus 12 is caused to print is not limited to the configuration illustrated in Fig. 4, and can be variously changed. For example, a chart further including a pattern other than the color checking pattern 302 and the smearing checking pattern 304 may be printed by the printing apparatus 12. Even in this case, it is preferable to use a chart within a range that falls within one medium 50. The smearing checking pattern 304 used in the present example can also be considered as a pattern for checking a maximum amount of ink in which smearing has occurred. As the smearing checking pattern 304, a pattern that is the same as or similar to the pattern in a known ink limit chart can be appropriately used. The smearing checking pattern 304 may further include a pattern for checking smearing of a color other than the secondary color. It is also conceivable to further include a pattern for checking the smearing of the secondary color in which a ratio of a color mixture of the primary colors is other than the same ratio in the smearing checking pattern 304. As described above, the control PC 14 according to the present example selects an approximate profile used for creating a new profile through the operation of step S114 in the operation illustrated in Fig. 2 based on the chart printed by the printing apparatus 12. Then, through the operation of step S116, a new profile is created by adjusting a hue as necessary based on the approximate profile. In this case, the printing apparatus 12 creates the new profile, for example, by performing the operation illustrated in Fig. 5.

Fig. 5 is a flowchart illustrating an example of an operation of creating a new profile and illustrates an example of a more detailed operation performed in steps S114 and S116. In the operation (S114) of selecting the approximate profile based on the chart, the control PC 14 according to the present example first receives an input of a search key for designating a search condition for selecting the approximate profile (S202). The control PC 14 receives the colorimetric value for the chart and the smeared ink amount as the search key by displaying the screen described with reference to, for example, Fig. 3(b) for the user.

After the operation in step S202, the control PC 14 searches the known profile based on the input search key. The control PC 14 according to the present example performs, as the operation of this search, a smearing reference selection (S204) of selecting the known profile based on the smeared ink amount, and a color reference selection (S206) of selecting the known profile based on colorimetric values. With regard to the operations in steps S204 and S206, an operation of selecting the known profile can be considered as an operation of selecting the known profile to be searched in accordance with the search key. The operation of step S204 according to the present example is an example of the operation of the first selection step and a first selection process. The operation of step S206 is an example of the operation of the second selection step and a second selection process. The second selection step and the second selection process can be considered as a step or a process of performing selection on the known profile selected in the first selection step or the first selection process under a condition different from that in the first selection step or the first selection process.

The control PC 14 according to the present example selects, from the known profiles, the known profile that can perform printing with an amount of ink less than the smeared ink amount, based on the smeared ink amount, through the operation of step S204. In this case, the operation of step S204 can be considered as an operation of excluding a profile having a high possibility of smearing occurrence. In step S206, the control PC 14 selects the known profile based on the colorimetric value by searching only the known profile selected in step S204 as a search target. In such a configuration, it is possible to the search for the known profile efficiently and appropriately. The operation of selecting the known profile in steps S204 and S206 will be described below in more detail. The control PC 14 according to the present example determines the known profile used as an approximate profile based on the selection result in step S206 and outputs the known profile as a search result (S208). In step S206 of the present example, the control PC 14 determines to use one of the known profiles as the approximate profile.

After the operation of step S208, the control PC 14 creates a new profile based on the approximate profile (S116). In the operation of creating the new profile, the control PC 14 according to the present example further causes the printing apparatus 12 to print the chart (S210) and checks whether a problem occurs in the hue in the printed chart (S212). In this case, in step S210, the control PC 14 creates print data indicating a predetermined chart using the known profile selected as the approximate profile in step S208, and supplies the print data to the printing apparatus 12 to cause the printing apparatus 12 to print the chart. In this case, the printing apparatus 12 prints the chart using the medium 50 to which the newly created profile is applied.

The chart printed by the printing apparatus 12 in step S210 can be considered as a chart for checking the color expressed using the approximate profile. The chart that the printing apparatus 12 is caused to print in step S210 can be considered as a chart for a purpose different from the chart printed by the printing apparatus 12 in step S112 of Fig. 2. As described above, according to the present example, the approximate profile in which smearing does not occur on the medium 50 to be used is selected by selecting the known profile based on the smeared ink amount in step S204. Therefore, the chart that the printing apparatus 12 is caused to print in step S210 can be considered as a chart mainly for checking the color. In this case, it is conceivable to use a chart having a different pattern from the chart printed by the printing apparatus 12 in step S112 as the chart that the printing apparatus 12 is caused to print in step S210. Depending on quality required for printing, it is conceivable to use the same chart as the chart that the printing apparatus 12 is caused to print in step S112 as the chart that the printing apparatus 12 is caused to print in step S210.

In step S212, the control PC 14 checks whether a problem occurs in the hue in the chart based on the colorimetric result obtained through colorimetry of the chart by the colorimeter. In this case, the control PC 14 checks whether a problem occurs in the hue in the chart by displaying the colorimetric result on a monitor and receiving a determination result of the user. For example, the control PC 14 may automatically check whether the problem occurs in the hue in the chart based on a preset criterion without receiving the determination result of the user. As the colorimeter in step S212, it is conceivable to use the same colorimeter as the colorimeter used for colorimetry on the chart that the printing apparatus 12 is caused to print in step S112. In accordance with the configuration of the printing system 10, a colorimeter different from the colorimeter used for colorimetry with respect to the chart printed by the printing apparatus 12 in step S112 may be used as the colorimeter used in step S212. The control PC 14 in step S212 may check whether a problem occurs in the hue in the chart based on, for example, a result of the user visually checking the chart without using the colorimetric result by the colorimeter. In this case, the control PC 14 receives the checking result of the user with regard to the chart to check whether a problem occurs in the hue in the chart.

When the problem does not occur in the hue in step S212 (Yes in S212), it is conceivable that the approximate profile can be used, as it is. Therefore, in this case, the control PC 14 creates (generates) a new profile using the approximate profile, as it is. In this case, the control PC 14 copies the known profile selected as the approximate profile and creates a new profile by appropriately setting a type of corresponding medium 50 and the name of the medium 50 to the copied profile.

When the problem occurs in the hue in step S212 (No in S212), the control PC 14 corrects the hue for the approximate profile (S214). In step S214 of the present example, the control PC 14 adjusts the hue by adjusting the value of the ink limit set for each color of the ink. The value of the ink limit can be considered as a value corresponding to the amount of ink ejected per unit area when printing is performed at a preset concentration of 100%. By adjusting the value of the ink limit, the amount of ink ejected per unit area during printing at a concentration other than 100% is also changed in accordance with an adjustment amount. The hue can be appropriately adjusted by individually adjusting the value of the ink limit for each color of the ink. In step S214 of the present example, the control PC 14 causes the printing apparatus 12 to print any image selected by the user and allows the user to check the image. In this case, the control PC 14 makes the value of the ink limit different and causes the printing apparatus 12 to print the same image. Then, the adjustment amount of the value of the ink limit is determined by allowing the user to select an appropriate image of the hue among the images and receiving the selection result from the user. In such a configuration, it is possible to adjust the hue appropriately. In this case, in step S214, the printing of the image and the adjustment of the value of the ink limit may be performed repeatedly a plurality of times in accordance with required printing quality. In such a configuration, it is possible to adjust the hue appropriately with higher accuracy.

When the hue is adjusted in step S214, the control PC 14 creates the new profile by reflecting a result of the hue adjustment in the known profile selected as the approximate profile. In this case, the control PC 14 copies the known profile selected as the approximate profile, appropriately sets the type of corresponding medium 50 and the name of the medium 50 to the copied profile, and further reflects the result of the adjustment of the hue to create the new profile. According to the present example, it is possible to appropriately create the new profile, for example, when the new medium 50 is used.

In a modified example of the operation of the control PC 14, it is also conceivable to appropriately change the foregoing operation. For example, in step S206, the control PC 14 may select a plurality of known profiles. In this case, in step S208, the control PC 14 may select a plurality of known profiles as the approximate profiles. In this case, the control PC 14 performs steps S210 to S214 on the plurality of approximate profiles and finally selects one of the approximate profiles among these operations. Then, the new profile is created based on the approximate profile. Even in such a configuration, it is possible to create the new profile appropriately.

Next, the operation of selecting the known profile in steps S204 and S206 will be described in more detail. As described above, the control PC 14 according to the present example determines the approximate profile by selecting the known profile based on the smeared ink amount and performing selection based on the colorimetric value of the selection result. Then, the new profile is created based on the approximate profile. According to such a configuration, it is possible to appropriately create the new profile with which a desired color can be expressed while preventing smearing.

In step S204 of the present example, the control PC 14 excludes the known profile in which the smearing has occurred based on the smeared ink amount determined by the user based on the secondary color patterns 314r to 314b (see Fig. 4) in the smearing checking pattern 304, and selects other known profiles. In this case, the control PC 14 excludes, from the known profiles, the known profiles including the setting in which ink of greater than or equal to the smeared ink amount is used for the ink of any color. Accordingly, the control PC 14 excludes the known profile having a high possibility of smearing occurring. With regard to the known profile, an operation of including a setting in which an amount of ink equal to or greater than the smeared ink amount is used for the ink of any color can be considered as an operation of using an amount of ink equal to or greater than the smeared ink amount when any color is expressed using the known profile. The occurrence of smearing when the known profile is used can also be considered as occurrence of smearing when printing is performed at a preset concentration of 100% for any color. In this case, the amount of ink in the case of printing performed at the concentration of 100% can be considered as an amount of ink when an input value of color is 100 (ink volume in the case of input of 100). Therefore, the operation of step S204 can be considered as an operation of excluding the known profile in which an ink volume in the case of the input of 100 is equal to or greater than the smeared ink amount.

The control PC 14 according to the present example further prepares parameters used to select the known profile subsequently performed during the operation of step S204. The control PC 14 interpolates the colorimetric value and calculates the amount of ink per unit area as preparation for such parameters. In this case, the interpolation of the colorimetric value can be considered as an operation of preparing parameters used in an operation subsequently performed in step S206. The control PC 14 according to the present example interpolates the colorimetric results for the color-by-color patterns 312c to 312k (see Fig. 4) in the color checking pattern. As the color-by-color patterns 312c to 312k, it is conceivable to use a pattern in which the color concentration is changed with a predetermined pitch (for example, about 5%). As described above, the color-by-color patterns 312c to 312k according to the present example are patterns in which the amount of ink per unit area differs in a plurality of steps. Therefore, it is conceivable that the colorimetric value used in the present example indicates a color colorimetrically measured in association with the amount of ink per unit area. In this case, the control PC 14 creates data indicating a relationship between the colorimetric value and the amount of ink with a smaller pitch (for example, about 1%) by interpolating the colorimetric value for each of the color-by-color patterns 312c to 312k by a method, for example, linear interpolation. In this case, for example, as the colorimetric value, it is conceivable to use a color of the Lab color system. In the preparation of parameters performed in the control PC 14, the calculation of the amount of ink per unit area can be considered as an operation of calculating the amount of ink used to express various colors in the known profile. In step S204, the control PC 14 excludes the known profile in which the possibility of the smearing occurring is high as described above by comparing the amount of ink with the smeared ink amount.

It is also conceivable to vary an amount of ink ejected in the inkjet head 122 of the printing apparatus 12. In this case, the inkjet head 122 can be considered to be capable of discharging the ink at a plurality of steps of volumes different from each other. In this case, it is conceivable to use a profile in consideration of the volumes of the inks at the plurality of steps as the known profile. Furthermore, in this case, in the calculation of the amount of ink per unit area, it is conceivable to calculate the amount of ink based on the known profile in consideration of the volumes of ink at a plurality of steps. In such a configuration, even when the inkjet head 122 capable of discharging the ink in the plurality of steps of volumes is used, the known profile in which the possibility of smearing occurring is high can be appropriately excluded.

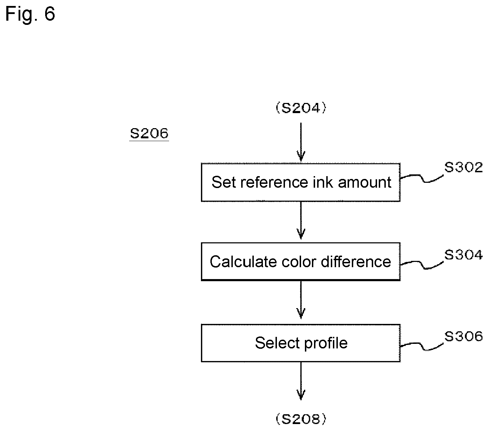

In step S206 of the present example, the control PC 14 further selects a known profile that has not been excluded in step S204 based on the colorimetric value interpolated as described above. In this case, it is conceivable to select the known profile through the operation illustrated in Fig. 6.

Fig. 6 is a flowchart illustrating an example of a more specific operation of the control PC 14 in step S206. In step S206 of the present example, the control PC 14 compares the colorimetric value for the chart with a color expressed when the known profile is used. In this comparison, the amount of ink per unit area is made uniform. The control PC 14 first sets the reference ink amount used as a reference of the amount of ink per unit area for each known profile based on the known profile for the known profile selected in step S204 (S302). The operation of step S302 of the present example is an example of the operation of the reference ink amount setting step and the reference ink amount setting process. In step S302, the control PC 14 sets the amount of ink discharged per unit area when printing is performed at a predetermined concentration set in advance using the known profile as the reference ink amount for each known profile. The control PC 14 according to the present example uses a concentration of 100% as the predetermined concentration. In this case, the reference ink amount can also be considered as the amount of ink when an input value of color is 100 (an ink volume during the input of 100).

After the operation in step S302, the control PC 14 calculates a color difference (ΔE) associated with the known profile for each known profile (S304). The operation of step S304 in the present example is an example of the operation of the color difference calculation step and the color difference calculating process. In step S304 of the present example, the control PC 14 calculates, for each known profile, a profile corresponding color that is a color corresponding to the reference ink amount in the known profile and a colorimetrically calculated color based on the colorimetric value. Then, the control PC 14 calculates a color difference between the profile corresponding color and the colorimetrically calculated color. As the profile corresponding color and the colorimetrically calculated color according to the present example, Lab values that are values indicating colors in the Lab color system are used. The profile corresponding color can be considered as a color associated with the reference ink amount in the known profile. In the present example, the Lab value associated with the concentration of 100% in the known profile is used for each ink color as the profile corresponding color. In this case, the profile corresponding color can also be considered as a Lab value associated with the ink volume during the input of 100 in the known profile.

As the colorimetrically calculated color, a colorimetric value in which the amount of ink associated with the colorimetric value is close to the reference ink amount among the interpolated colorimetric values as described above is used. In this case, the colorimetrically calculated color can be considered as a color calculated by performing the foregoing interpolation processing. The colorimetrically calculated color can also be considered as a color calculated based on the colorimetric value as a color corresponding to the reference ink amount. The control PC 14 according to the present example selects, for each reference profile, a colorimetric value in which the associated amount of ink is closest to the reference ink amount for the known profile from the interpolated colorimetric value data. Then, the color difference between the profile corresponding color and the colorimetrically calculated color is calculated using the Lab value indicating the selected colorimetric value as the colorimetrically calculated color. The control PC 14 according to the present example calculates the color difference between the profile corresponding color and the colorimetrically calculated color for each color of CMYK by calculating such a color difference for each color of ink used in the printing apparatus 12.

In step S304 of the present example, for each known profile, the control PC 14 further calculates a color difference in a state in which ink is not ejected in addition to the color difference for each color of ink. The color difference in a state in which the ink is not ejected can be considered as a color difference of the color of the medium 50 in a state in which the ink is not attached. The color difference in a state in which the ink is not discharged can also be considered as a color difference corresponding to the color of the medium 50 (base color of the medium 50). The color difference in a state in which ink is not ejected can be considered to correspond to a so-called color difference of paper white. The control PC 14 according to the present example calculates the color difference in the state in which the ink is not ejected based on the profile corresponding color and the colorimetrically calculated color corresponding to the case in which the concentration of the ink is 0%.

After the operation of step S304, the control PC 14 selects the known profile used as the approximate profile based on the color difference calculated in step S304 (S306). The operation of step S306 in the present example is an example of the operation of the profile selection step and the profile selection process. In step S306, the control PC 14 selects the known profile used as the approximate profile based on the color difference obtained for each color of the ink and a variance thereof using a preset calculation formula. In this case, the known profile is selected further in consideration of the base color of the medium 50 by further based on the color difference in the state in which the ink is not ejected. According to the present example, it is possible to appropriately select the known profile used as an approximate profile.

Next, supplementary description of the above-described configuration will be made. As described above, in the present example, for example, when the new medium 50 for which there is no corresponding known profile is used, the control PC 14 selects the approximate profile from the known profiles based on the smeared ink amount and the colorimetric values. Then, the new profile corresponding to the new medium 50 is created by adjusting the hue of the approximate profile as necessary. In this case, the approximate profile used for creating the new profile can be efficiently and appropriately searched for based on the smeared ink amount and the colorimetric value. Accordingly, the new profile can be efficiently and appropriately created.

With regard to this point, it is usually preferable in the profile that a desired color can be expressed in the printing apparatus 12 by using the profile. In this case, it is preferable to express various colors with the amount of ink in a range in which the smearing does not occur on the medium 50. When the new profile is created based on the known profile, it is conceivable that, in color expression, it is relatively easy to perform adjustment to some extent in the process of creating the profile, for example, as in the above-described hue adjustment. On the other hand, since the amount of ink in which the smearing has occurred closely relates to absorbability of the medium 50, it is conceivable that there is usually little room for adjustment. Therefore, when the new profile is created based on the known profile and smearing has occurred if the known profile is used, as it is, it is usually more difficult to perform adjustment so that a desired color is expressed while preventing smearing. On the other hand, the control PC 14 according to the present example excludes the known profile in which there is a high possibility of the smearing occurring based on the smeared ink amount, as described above. Then, the control PC 14 performs search based on the colorimetric values for the known profiles that have not been excluded. In such a configuration, the known profile used as the approximate profile can be more appropriately selected.

As described above, in the operation of the search based on the colorimetric value, calculation, for example, setting of the reference ink amount and calculation of the color difference, are performed for each known profile. Therefore, if the number of known profiles to be searched increases, there is concern of a time required for the search being enormous. On the other hand, according to the present example, the time required for the search can be appropriately prevented from becoming enormous by performing the search based on the colorimetric value only for the known profile selected based on the smeared ink amount. Therefore, according to the present example, it is possible to perform the search for the known profile more efficiently. As can be understood from the matters described above, in the present example, the smeared ink amount and the colorimetric value can be checked, for example, by performing the printing of the chart once. Therefore, in this respect, it is also possible to select the approximate profile efficiently. Depending on the configuration of the printing system 10 and the quality required for printing, the chart may be printed a plurality of times as necessary to check the smeared ink amount and the colorimetric value.

When an approximate profile used for creating a new profile corresponding to the new medium 50 is considering to be only selected, it seems to be sufficient to narrow down the known profiles by focusing on the material of the medium 50. By performing the narrowing down the known profiles in this way, it seems to be able to select the known profile in which smearing is less likely to occur and it is less required to adjust the hue. However, in this case, since the number of known profiles that are targets is limited to a small number, it is conceivable that it may be difficult to select an optimal approximate profile. In the present example, however, by performing the search based on the smearing occurrence amount and the colorimetric value, the approximate profile can be selected from more known profiles than the known profiles for the medium 50 of the same material. In this case, as described above, a more appropriate approximate profile can be selected in consideration of the base color of the medium 50 by further considering the color difference in a state in which the ink is not ejected. As described above, in the present example, the hue is adjusted as necessary for the approximate profile. In such a configuration, even when printing cannot be appropriately performed on the new medium 50 only by using the approximate profile as it is, it is possible to create the new profile corresponding to the new medium appropriately. Accordingly, the new profile corresponding to a variety of new media 50 can be appropriately created.

As described above, a computer, for example, the control PC 14 according to the present example, can be considered to function as a profile creation device. In this case, it is conceivable that the profile creation device includes a processing part that performs an operation corresponding to the search process, and the profile creation process described above. In this case, the profile creation device can be considered to include a search processing part and a profile creation processing part. In this case, it is conceivable that at least a part (for example, a CPU) of the control PC 14 functions as the processing part by following a program for controlling an operation of the control PC 14.

In the above description, the operation of searching for the known profile and the operation of creating the new profile as necessary have been mainly described with regard to the profile used for creating the print data. In this case, the profile can also be considered as an example of setting information that is information indicating a setting used in the process of creating the print data. In this case, the above-described known profile can be considered as an example of the known setting information which is the known setting information. The operation of creating the new profile based on the known profile can be considered as an example of the operation in the setting information creation step. The setting information creation step can be considered as a step of creating new setting information based on known setting information selected based on the search result in the search step.

In a modified example of the configuration of the printing system 10, for example, it is conceivable to use setting information other than the profile. In a modified example of the configuration of the printing system 10, for example, it is conceivable to perform monotone (monochrome tone) printing using one color ink (for example, black ink) by the printing apparatus 12. In this case, it is conceivable to use setting information indicating a setting used for creating print data for causing the printing apparatus 12 to perform monotone printing. As such setting information, for example, it is conceivable to use information for adjusting the value of the ink limit and the concentration at a variable dot (VD). In this case, for example, when a new medium 50 is used, it is conceivable to create new setting information that enables monotone printing with better image quality as necessary. In this case, it is also conceivable to cause the printing apparatus 12 to print a chart including the smearing checking pattern and check the smeared ink amount. It is conceivable to perform search for the known setting information based on the smeared ink amount, and to create new setting information based on the known setting information selected based on the search result. In such a configuration, a more appropriate setting value can be used for the amount of ink, and the setting value in the variable dot in the new setting information. In the above operation, an operation of creating new setting information may be an operation of creating a file (setting file) indicating the new setting information. In this case, it is conceivable to use a file in a format corresponding to content of the setting information as the file indicating the setting information. For example, in order to enhance commonality in a process (setting method) with a case in which color printing is performed, it is also conceivable to use a file indicating the setting information in the same format as the profile.

### INDUSTRIAL APPLICABILITY

The present invention can be appropriately used for, for example, a profile creation method.

### REFERENCE SIGNS LIST

- 10: Printing system
- 102: Head unit
- 104: Platen
- 106: Main scanning driving unit
- 108: Sub-scanning driving unit
- 110: Control unit
- 12: Printing apparatus
- 122: Inkjet head
- 14: Control PC
- 202: Search word input part
- 204: Search condition setting part
- 206: Button
- 208: Button
- 212: Colorimetric value setting part
- 214: Smearing condition setting part
- 216: Button
- 218: Button
- 220: Search result display part
- 222: Button
- 224: Button
- 302: Color checking pattern
- 304: Smearing checking pattern
- 312: Color-by-color pattern
- 314: Secondary color pattern
- 50: Medium

## Claims

1. A profile creation method of creating device profiles used in a process of creating print data indicating an image printed by a printing apparatus, the profile creation method comprising:
a search step of performing search based on a search condition from a known profiles that are known device profiles; and
a profile creation step of creating a new device profile based on the known profile selected based on a search result in the search step,
wherein the printing apparatus is an apparatus that performs color printing using inks of a plurality of colors, and
wherein, in the search step, a smeared ink amount indicating an amount of ink in which smearing of ink has occurred on the medium is used as the search condition.

2. The profile creation method as set forth in claim 1, further comprising:
a chart printing step of causing the printing apparatus to print a chart including a smearing checking pattern that is a pattern for checking a smeared ink amount on the medium,
wherein, in the search step, an input of the smeared ink amount is received from a user.

3. The profile creation method as set forth in claim 2, wherein
the smeared ink amount indicates an amount of ink by which smearing occurs in a secondary color that is a color obtained by mixing two color inks, and
the smearing checking pattern includes a pattern in which color concentration differs in a plurality of steps for the secondary color.

4. The profile creation method as set forth in claim 1, wherein
the search step includes
a first selection step of selecting the known profile based on the smeared ink amount, and
a second selection step of performing selection of the known profile selected in the first selection step under a condition different from a condition in the first selection step, and
in the first selection step, the known profile in which printing can be performed with an amount of ink less than the smeared ink amount is selected.

5. The profile creation method as set forth in claim 1, further comprising:
a chart printing step of causing the printing apparatus to print a chart including a color checking pattern that is a pattern for checking a color expressed by an ink on the medium,
wherein, in the search step, a colorimetric value obtained by performing colorimetry on the color checking pattern is further used as the search condition.

6. The profile creation method as set forth in claim 5, wherein
the color checking pattern includes a color-by-color pattern that is a pattern in which an amount of ink per unit area differs in a plurality of steps for an ink of one same color, and
the colorimetric value used in the search step is a value obtained by performing colorimetry on the color-by-color pattern, and
the search step includes
a first selection step of selecting the known profile based on the smeared ink amount, and
a second selection step of performing selection based on the colorimetric values for the known profile selected in the first selection step, and
the second selection step includes
a reference ink amount setting step of setting a reference ink amount used as a reference of the amount of ink per unit area and setting the reference ink amount based on the known profile for the known profiles,
a color difference calculation step of calculating a color difference associated with the known profile and calculating, for the known profiles, the color difference between a profile corresponding color that is a color corresponding to the reference ink amount in the known profile and a colorimetrically calculated color that is a color calculated based on the colorimetric value as a color corresponding to the reference ink amount, and
a profile selection step of selecting the known profile based on the color difference calculated in the color difference calculation step.

7. The profile creation method as set forth in claim 6, wherein
in the color difference calculation step, for the known profiles,
the color difference for each color of the inks of the plurality of colors used in the printing apparatus and the color difference corresponding to the color of the medium are calculated.

8. The profile creation method set forth in claim 1, wherein, in the profile creation step, the new device profile is created by adjusting a hue of the known profile selected based on the search result in the search step.

9. A profile search method of searching for device profiles used in a process of creating print data indicating an image printed by a printing apparatus, the profile search method comprising:
a search step of performing search based on a search condition from the known device profiles;
wherein the printing apparatus is an apparatus that performs color printing using inks of a plurality of colors,
wherein, in the search step, as the search condition, a smeared ink amount indicating an amount of ink in which smearing of ink has occurred on the medium is used.

10. A program causing a computer to create device profiles used in a process of creating print data indicating an image printed by a printing apparatus, the program causing the computer to perform:
a search process of performing search based on a search condition from a known profiles that are known device profiles; and
a profile creation process of creating a new device profile based on the known profile selected based on a search result in the search process,
wherein the printing apparatus is an apparatus that performs color printing using inks of a plurality of colors, and
wherein, in the search process, as the search condition, a smeared ink amount indicating an amount of ink in which smearing of ink has occurred on the medium is used.

11. A profile creation device that creates device profiles used in a process of creating print data indicating an image printed by a printing apparatus,
wherein the profile creation device performs
a search process of performing search based on a search condition from known profiles that are a known device profiles, and
a profile creation process of creating a new device profile based on the known profile selected based on a search result in the search process,
wherein the printing apparatus is an apparatus that performs color printing using inks of a plurality of colors, and
wherein, in the search process, as the search condition, a smeared ink amount indicating an amount of ink in which smearing of ink has occurred on the medium is used.

12. A method for creating setting information that is information indicating a setting used in a process of creating print data indicating an image printed by a printing apparatus that performs printing using ink, the method comprising:
a search step of performing search based on a search condition from known setting information that is a known setting information; and
a setting information creation step of creating new setting information based on the known setting information selected based on a search result in the search step,
wherein, in the search step, a smeared ink amount indicating an amount of ink in which smearing of ink has occurred on the medium is used as the search condition.
